# EUROPEAN PATENT APPLICATION

(11) **EP 4 696 434 A2**
(43) Date of publication of application: **18.02.2026**
(21) Application number: 25195460.8
(22) Date of filing: 12.08.2025
(51) Int. Cl.: B22F 10/28, B22F 10/362, B22F 10/85, B22F 12/13, B22F 12/41, B33Y 10/00, B33Y 50/02

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(30) Priority: 15.08.2024 JP 2024135552
(71) Applicant: Jeol Ltd., Akishima, Tokyo 196-8558 (JP)
(72) Inventor: IIDA, Masahiko, Tokyo, 196-8558 (JP); KAWAKAMI, Masahiko, Tokyo, 196-8558 (JP); MIYAKITA, Ayumu, Tokyo, 196-8558 (JP); DAINO, Yohei, Tokyo, 196-8558 (JP)
(74) Representative: Boult Wade Tennant LLP

(57) **Abstract**

A three-dimensional PBF-AM apparatus (1) reflecting one aspect of the present invention includes a stage (6), a beam emission unit (2), a beam deflection unit (10), and a control unit (30). A powder layer made of a powder material is laid on the stage (6). The beam emission unit (2) emits a beam toward the powder layer laid on the stage (6). The beam deflection unit (10) deflects the beam emitted from the beam emission unit (2). The control unit (30) controls the beam emission unit (2) and the beam deflection unit (10). Before melting a region corresponding to a part to be manufactured in the powder layer laid on the stage (6) with a melting beam, the control unit (30) controls the beam emission unit (2) and the beam deflection unit (10) to perform pre-melting preheating in which the region corresponding to the part is heated with a heating beam.

## Description

### BACKGROUND

### Technical Field

The present invention relates to a three-dimensional powder bed fusion additive manufacturing (PBF-AM) apparatus and a three-dimensional powder bed fusion additive manufacturing (PBF-AM) method.

### Related Art

In recent years, three-dimensional PBF-AM apparatuses have become known, in which a three-dimensional object is manufactured by stacking layers in which a powder material has been solidified. The three-dimensional PBF-AM apparatus irradiates a powder material laid on a stage with a beam to melt and solidify the powder material.

Patent Literature 1 discloses a three-dimensional PBF-AM apparatus. In the method of forming a manufactured object using the three-dimensional PBF-AM apparatus disclosed in Patent Literature 1, the steps include a manufacturing preparation step, a stage heating step, a powder laying step, a first preheating step, a melting step, a second preheating step, and a manufactured object removal step. In the first preheating step, the powder on the stage is irradiated with the electron beam by the beam irradiation device to preliminarily sinter the powder.

### Citation List

### Patent Literature

Patent Literature 1: JP 2022-106332

### SUMMARY

However, in the first preheating step of the three-dimensional PBF-AM apparatus disclosed in Patent Literature 1, the entire powder on the stage is presintered by scanning the entire powder on the stage with an electron beam. Thus, in a case where a plurality of parts are manufactured on the stage, the heat dissipation of the powder surface progresses as the parts are manufactured, and the surface temperature of the powder decreases. When the surface temperature of the powder decreases, since defects such as cracks may occur in the manufactured object during solidification after melting, quality of the manufactured object may be degraded.

In view of the above problems, an object of the present invention is to provide a three-dimensional PBF-AM apparatus and a three-dimensional PBF-AM method capable of suppressing degradation in quality of a three-dimensional structure to be manufactured.

In order to solve the above problem and achieve the object of the present invention, a three-dimensional PBF-AM apparatus reflecting one aspect of the present invention includes a stage, a beam emission unit, a beam deflection unit, and a control unit. A powder layer made of a powder material is laid on the stage. The beam emission unit emits a beam toward the powder layer laid on the stage. The beam deflection unit deflects the beam emitted from the beam emission unit. The control unit controls the beam emission unit and the beam deflection unit. Before melting a region corresponding to a part to be manufactured in the powder layer laid on the stage with a melting beam, the control unit controls the beam emission unit and the beam deflection unit to perform pre-melting preheating in which the region corresponding to the part is heated with a heating beam.

A three-dimensional PBF-AM method reflecting one aspect of the present invention is a method executed in a melting step of melting a region corresponding to a part to be manufactured in a powder layer laid on a stage. In the melting step, before melting a region corresponding to a part with a melting beam, a control unit performs pre-melting preheating by controlling a beam emission unit and a beam deflection unit to heat the region corresponding to the part with a heating beam.

According to the three-dimensional PBF-AM apparatus and the three-dimensional PBF-AM method having the above configuration, a degradation in the quality of the three-dimensional structure to be manufactured can be suppressed.

### BRIEF DESCRIPTION OF DRAWINGS

FIG. 1 is a schematic configuration diagram illustrating a three-dimensional powder bed fusion additive manufacturing (PBF-AM) apparatus according to an embodiment;
FIG. 2 is a block diagram illustrating a functional configuration of a beam position control unit of the three-dimensional PBF-AM apparatus according to the embodiment;
FIG. 3 is a plan view illustrating a state in which a plurality of parts are manufactured on a stage of the three-dimensional PBF-AM apparatus according to the embodiment;
FIG. 4 is a view illustrating a first melting pattern showing a first example of melting by the three-dimensional PBF-AM apparatus according to the embodiment;
FIG. 5 is a table illustrating setting examples of a melting beam and a preheating beam in the first melting pattern;
FIG. 6 is a view illustrating a second melting pattern showing a second example of melting by the three-dimensional PBF-AM apparatus according to the embodiment;
FIG. 7 is a view illustrating the second melting pattern showing the second example of melting by the three-dimensional PBF-AM apparatus according to the embodiment;
FIG. 8 is a view illustrating a third melting pattern showing a third example of melting by the three-dimensional PBF-AM apparatus according to the embodiment;
FIG. 9 is a view illustrating the third melting pattern showing the third example of melting by the three-dimensional PBF-AM apparatus according to the embodiment;
FIG. 10 is a table illustrating setting examples of a melting beam and a preheating beam in the second and third melting patterns;
FIG. 11 is a view illustrating a temperature distribution during melting in a case where pre-melting preheating of the second and third melting patterns is not performed;
FIG. 12 is a view illustrating a temperature distribution during melting in a case where the melting (with pre-melting preheating) is performed with the second and third melting patterns;
FIG. 13 is a view illustrating a fourth melting pattern showing a fourth example of melting by the three-dimensional PBF-AM apparatus according to the embodiment;
FIG. 14 is a table illustrating setting examples of a melting beam and a preheating beam in the fourth melting pattern;
FIG. 15 is a view illustrating a temperature distribution during melting in a case where pre-melting preheating of the fourth melting pattern is not performed; and
FIG. 16 is a view illustrating the temperature distribution during melting in a case where the melting (with pre-melting preheating) is performed with the fourth melting pattern.

### DETAILED DESCRIPTION

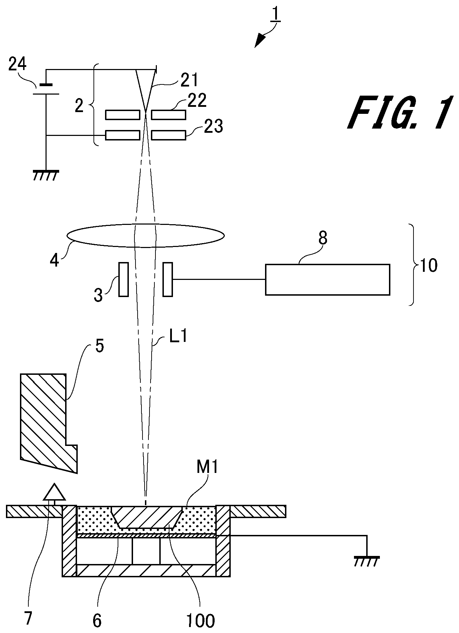

The following describes an embodiment of a three-dimensional powder bed fusion additive manufacturing (PBF-AM) apparatus and a three-dimensional powder bed fusion additive manufacturing (PBF-AM) method according to the present invention with reference to FIGS. 1 to 16. In the drawings, the same members are denoted by the same reference numerals.

### [Three-dimensional PBF-AM Apparatus]

First, a configuration of a three-dimensional PBF-AM apparatus according to an embodiment will be described with reference to FIG. 1.

FIG. 1 is an explanatory diagram schematically illustrating a three-dimensional PBF-AM apparatus according to one embodiment.

A three-dimensional powder bed fusion additive manufacturing (PBF-AM) apparatus 1 illustrated in FIG. 1 is an apparatus that irradiates a powder material with an electron beam to melt the powder material, and stacks images of the solidified powder material to manufacture a three-dimensional object. As illustrated in FIG. 1, the three-dimensional PBF-AM apparatus 1 includes an electron gun 2 that emits an electron beam L1, a lens 4, a powder material storing chamber 5, a stage 6, a powder bed fusion additive manufacturing arm 7, and a beam deflection unit 10. The electron gun 2 corresponds to a beam emission unit according to the present invention.

The electron gun 2, a deflection amplifier 3, the lens 4, the powder material storing chamber 5, the stage 6, and the powder bed fusion additive manufacturing arm 7 are disposed in a manufacturing chamber (not illustrated). A vacuum pump is connected to the manufacturing chamber. The vacuum pump removes gas inside the manufacturing chamber. As a result, the internal space of the manufacturing chamber is evacuated.

The electron gun 2 includes an emitter 21, an extraction electrode 22, and an acceleration electrode 23. The emitter 21 and the acceleration electrode 23 are connected to an acceleration power supply 24. In addition, the extraction electrode 22 is connected to an extraction potential generation unit (not illustrated). The extraction potential generation unit applies an extraction potential to the extraction electrode 22. When the extraction potential is applied, the extraction electrode 22 extracts electrons from the emitter 21.

The acceleration electrode 23 accelerates electrons extracted from the emitter 21 by the acceleration potential applied by the acceleration power supply 24 to generate the electron beam L1. The acceleration electrode 23 directs the generated electron beam L1 toward the lens 4 and the deflection amplifier 3.

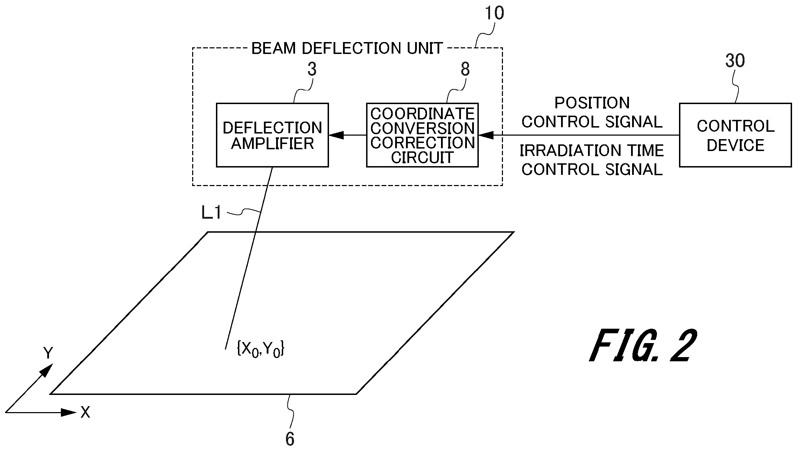

Between the electron gun 2 and the stage 6, the deflection amplifier 3, which will be described later, of the beam deflection unit 10 is disposed. Note that a detailed configuration of the beam deflection unit 10 will be described later with reference to FIG. 2.

The lens 4 is disposed between the deflection amplifier 3 and the electron gun 2. The lens 4 focuses the electron beam L1 emitted from the electron gun 2 by electromagnetic action. Then, the lens 4 forms a focal point of the electron beam L1 on the stage 6.

The stage 6 is formed in a substantially flat plate shape. The stage 6 is movably supported along the vertical direction by a driving device (not illustrated). A powder material M1 is supplied from the powder material storing chamber 5 to one surface of the stage 6. Examples of the powder material M1 include metals such as titanium, aluminum, and iron, as well as solid materials such as ceramics and organic resins.

In addition, the powder bed fusion additive manufacturing arm 7 is disposed near the stage 6. The powder bed fusion additive manufacturing arm 7 is supported to be movable in the horizontal direction on one surface of the stage 6 by a movement mechanism (not illustrated). When the powder bed fusion additive manufacturing arm 7 moves in the horizontal direction on one surface of the stage 6, the powder material M1 is laid on one surface of the stage 6 at a predetermined height (for example, the diameter of one particle of the powder material M1).

By irradiating the layer (powder layer) of the powder material M1 laid on the stage 6 with the electron beam L1, the powder material M1 is melted and then solidified. After the powder material M1 is melted and solidified, the stage 6 is further lowered downward in the vertical direction by a driving device (not illustrated). Then, the powder material storing chamber 5 supplies the new powder material M1, and the powder bed fusion additive manufacturing arm 7 lays the powder material M1 at a predetermined height.

### [Beam Deflection Unit]

Next, a configuration of the beam deflection unit 10 will be described with reference to FIG. 2.

FIG. 2 is a block diagram illustrating a functional configuration of the beam deflection unit 10.

As illustrated in FIG. 2, the beam deflection unit 10 includes the deflection amplifier 3 and a coordinate conversion correction circuit 8. The deflection amplifier 3 is disposed between the electron gun 2 and the stage 6. The deflection amplifier 3 deflects the electron beam L1 emitted from the electron gun 2 to a predetermined position on the stage 6.

The coordinate conversion correction circuit 8 controls the operation of the deflection amplifier 3. The coordinate conversion correction circuit 8 is connected to a control device 30. For example, a personal computer (PC) can be adopted as the control device 30. The control device 30 transmits a position command signal and an irradiation time command signal to the coordinate conversion correction circuit 8. The position command signal is a signal indicating a coordinate position indicating an irradiation position of the electron beam L1. The irradiation time command signal is a signal indicating the irradiation time of the electron beam L1.

The coordinate conversion correction circuit 8 generates an amplifier control signal according to the instructed coordinate position and irradiation time based on the received position command signal and irradiation time command signal. The coordinate conversion correction circuit 8 operates the deflection amplifier 3 based on the generated amplifier control signal. Accordingly, the deflection amplifier 3 deflects the electron beam L1 emitted from the electron gun 2 to the commanded coordinate position on the stage 6.

### [Manufacturing of Plurality of Parts]

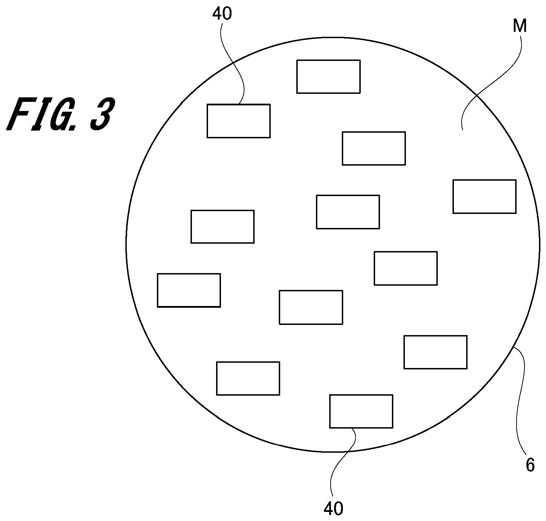

Next, a case where the three-dimensional PBF-AM apparatus 1 manufactures a plurality of parts on the stage 6 will be described with reference to FIG. 3.

FIG. 3 is a plan view illustrating a state in which a plurality of parts are formed on the stage 6 of the three-dimensional PBF-AM apparatus 1.

As illustrated in FIG. 3, the three-dimensional PBF-AM apparatus 1 can manufacture a plurality of parts (manufactured object) 40 on the stage 6. The plurality of parts 40 may have the same shape or different shapes. The positions at which the plurality of parts 40 are manufactured are dispersed at an appropriate distance. The positions where the plurality of parts 40 are manufactured may be arranged in a predetermined direction.

In a case of manufacturing the plurality of parts 40 on the stage 6, the three-dimensional PBF-AM apparatus 1 performs a manufacturing preparation step, a stage heating step, a powder laying step, a first preheating step, a melting step, a second preheating step, and a manufactured object removal step. The three-dimensional PBF-AM apparatus 1 repeats the powder laying step, the first preheating step, the melting step, and the second preheating step until the manufacturing of the plurality of parts 40 is completed.

### (Manufacturing Preparation Step)

In the manufacturing preparation step, the three-dimensional PBF-AM apparatus 1 acquires manufacturing data for forming a manufactured object. The manufacturing data is supplied to the control device 30 via a communication line, for example, and is stored in a storage unit 34 of the control device 30. Furthermore, the manufacturing data may be recorded on a recording medium readable by the control device 30 and supplied to the control device 30 via the recording medium.

In a case of manufacturing the plurality of parts 40 on the stage 6, the control device 30 calculates the manufacturing position of each part 40. The manufacturing position of each part 40 may be acquired together with the manufacturing data.

### (Stage Heating Step)

In the stage heating step, the control device 30 controls the electron gun 2 and the beam deflection unit 10 to irradiate the upper surface of the stage 6 with the electron beam L1. Accordingly, the stage 6 is heated.

### (Powder Laying Step)

In the powder laying step, the stage 6 is lowered by one layer in the vertical direction by a driving device (not shown). Next, the powder material storing chamber 5 (see FIG. 1) supplies the powder material M1 to the upper surface of the stage 6. Then, the powder bed fusion additive manufacturing arm 7 (see FIG. 1) moves on the stage 6 in a horizontal direction to lay the powder material M1 on the stage 6 at a predetermined height.

### (First Preheating Step)

In the first preheating step, the control device 30 controls the electron gun 2 and the beam deflection unit 10 to irradiate the powder material M on the stage 6 with the electron beam L1. At this time, the control device 30 causes the electron beam L1 to scan the entire surface of the powder material M to heat (pre-sintering) the entire surface of the powder material M. The first preheating step is also referred to as a powder-heating step.

### (Melting Step)

In the melting step, the control device 30 controls the electron gun 2 and the beam deflection unit 10 to perform pre-melting preheating and melting for each part 40. In the pre-melting preheating, the powder material M (hereinafter, referred to as a "melting target portion") corresponding to at least the part 40 is irradiated with the electron beam L1 to heat the melting target portion.

After the pre-melting preheating, the control device 30 irradiates the melting target portion with the electron beam L1 to melt the melting target portion. The melting target portion melted by the irradiation of the electron beam L1 is solidified after the electron beam L1 passes through the melting target portion. When the pre-melting preheating and the melting are completed for the melting target portion of all the parts 40, the manufacturing of one layer of all the parts 40 is completed.

### (Second Preheating Step)

In the second preheating step, the control device 30 controls the electron gun 2 and the beam deflection unit 10 to irradiate the plurality of parts 40 on the stage 6 with the electron beam L1. Therefore, the plurality of parts 40 are heated in preparation for formation of the next layer. The second preheating step is also referred to as an after-heating step.

### (Manufactured Object Removal Step)

In the manufactured object removal step, the three-dimensional PBF-AM apparatus 1 removes an excessive portion attached to the manufactured object or peels the manufactured object from the stage 6 using a post-process processing unit (not illustrated).

### [First Melting Pattern]

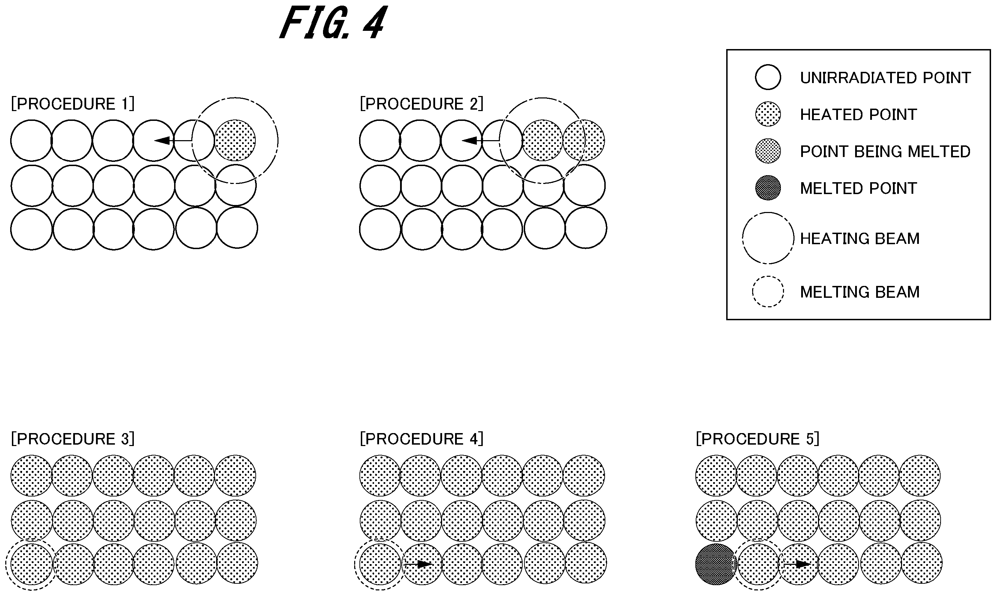

Next, a first melting pattern showing a first example of melting performed by the control device 30 in the melting step will be described with reference to FIG. 4.

FIG. 4 is a view illustrating the first melting pattern.

The point irradiated with the electron beam L1 illustrated in FIG. 4 is, for example, a point at which the powder material M is melted when the part 40 is manufactured. The points to be irradiated with the electron beam L1 for manufacturing the part 40 are, for example, arranged in a first direction X parallel to the horizontal direction and a second direction Y parallel to the horizontal direction and substantially perpendicular to the first direction X. Note that the points irradiated with the electron beam L1 are not limited to being arranged along two directions that intersect substantially perpendicularly, and may be arranged, for example, along two directions that intersect at an arbitrary angle.

In FIG. 4, the first direction X is a horizontal direction, and the second direction Y is a vertical direction. Hereinafter, a line along the first direction X is defined as a row, and a line along the second direction Y is defined as a column. The points irradiated with the electron beam L1 are arranged in 3 rows and 6 columns, for example.

Hereinafter, a point before pre-melting preheating is referred to as an "unirradiated point". In the first melting pattern, the control device 30 controls the electron gun 2 to set the electron beam L1 as a heating beam. Then, the control device 30 controls the beam deflection unit 10 to move the focal point of the heating beam to the unirradiated point at the upper right corner portion of the part 40 (Procedure 1).

The step of setting the heating beam and the step of moving the focal point of the electron beam L1 may be performed simultaneously in parallel. In addition, the step of moving the focal point of the electron beam L1 may be performed prior to the step of setting it as the heating beam. A setting item of the heating beam includes, for example, a beam diameter. The diameter of the heating beam is set to be larger than the diameter of the melting beam to be described later and set to a size that does not melt the unirradiated point.

Next, the control device 30 controls the beam deflection unit 10 to perform the pre-melting preheating. That is, the control device 30 irradiates all the unirradiated points of the part 40 with the heating beam (Procedure 2). For example, the control device 30 heats all the unirradiated points of the part 40 by sequentially irradiating the adjacent points from the unirradiated point of the upper right corner portion with the heating beam. As a result, an area including all the unirradiated points of the part 40 becomes an area subjected to the pre-melting preheating. Hereinafter, the point subjected to the pre-melting preheating is referred to as a "heated point".

Next, the control device 30 controls the electron gun 2 to change the electron beam L1 to a melting beam (Procedure 3). In this example, the unirradiated point at the lower left corner portion is finally heated. The control device 30 changes the heating beam to a melting beam at a position where the focal point is set to a heated point located at the lower left corner portion. The setting item of the melting beam includes, for example, a beam diameter. For example, the diameter of the melting beam is smaller than the diameter of the heating beam.

Next, the control device 30 starts irradiation with the melting beam from the heated point at the lower right corner portion (Procedure 4). Then, the control device 30 controls the beam deflection unit 10 to sequentially irradiate the adjacent points from the heated point at the lower right corner portion with the melting beam to melt all the heated points of the part 40 (procedure 5).

In this manner, in the first melting pattern, all unirradiated points of the part 40 are subjected to preheating (pre-melting preheating) before melting the unirradiated points. This makes it possible to reduce the temperature difference between the molten point and the surrounding thereof. As a result, defects such as cracks are less likely to occur in the manufactured object during solidification after melting, and degradation in the quality of the manufactured object can be suppressed or prevented.

In the first melting pattern described above, melting was started from the heated point at the lower right corner portion, which was lastly subjected to the pre-melting preheating. However, the point at which melting is started may be a point at which pre-melting preheating is started (heated point at the upper right corner portion).

The timing of setting the diameter of the electron beam L1 to the melting beam diameter may be any of before moving to the point where the pre-melting preheating is started, after moving to the point where the pre-melting preheating is started, or while moving to the point where the pre-melting preheating is started. In a case where the diameter of the electron beam L1 is changed while moving, melting can be started earlier than in other cases, so that the time required for the melting can be shortened.

### [Beam Setting in First Melting Pattern]

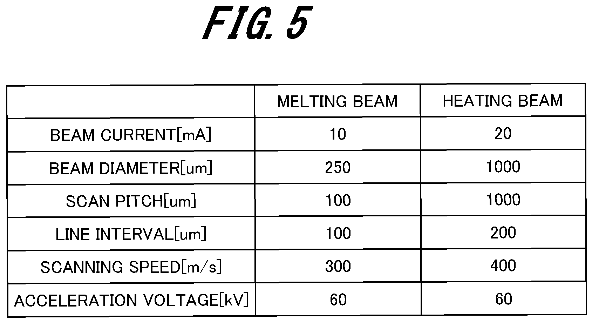

Next, setting of the melting beam and the heating beam in the first melting pattern will be described with reference to FIG. 5.

FIG. 5 is a table illustrating setting examples of the melting beam and the heating beam in the first melting pattern.

As illustrated in FIG. 5, the setting items of the melting beam and the heating beam include, for example, a beam current value, a beam diameter, a scan pitch, a line interval, a scanning speed, and an acceleration voltage value. In the first melting pattern, the heating beam is a variable in which all setting items can be appropriately set. In addition, the melting beam is a variable in which the beam current value, the beam diameter, the scanning speed, and the acceleration voltage value can be appropriately set.

When the beam current value increases, the number of electrons per unit time in the electron beam increases, and the energy of the electron beam increases. The beam current value of the melting beam of this example is set to a value smaller than the beam current value of the heating beam. However, the beam current value of the melting beam of this example may be equal to or larger than the beam current value of the heating beam.

When the beam diameter increases, the number of electrons per unit area in the electron beam decreases, and the energy of the electron beam becomes lower. The beam diameter of the melting beam of this example is set to a value smaller than the beam diameter of the heating beam.

The scan pitch is the distance between adjacent scan points. The scan pitch of the heating beam of this example is set to a value larger than the scan pitch of the melting beam.

The line interval is a distance between the centers of the electron beams in lines adjacent in the second direction Y. The line interval of the melting beam is determined according to the interval in the second direction Y at the plurality of unirradiated points of the part 40. The line interval of the heating beam of this example is larger than the line interval of the melting beam. The line interval of the heating beam of this example can be appropriately set according to the beam diameter.

When the scanning speed increases, the irradiation amount of the electron beam decreases. The scanning speed of the melting beam in this example is set to a slower value than the scanning speed of the heating beam. Since the heating beam is a beam that heats the powder material M in the region corresponding to the part 40, the scanning speed is made faster than that of the melting beam.

The acceleration voltage value determines the energy of the electron beam. The acceleration voltage values of the melting beam and the heating beam of this example are set to the same value. The acceleration voltage values of the melting beam and the heating beam of this example may be different values.

In the setting example illustrated in FIG. 5, the beam current value, the beam diameter, the scan pitch, and the value of scanning speed of the melting beam were set smaller than the beam current value, the beam diameter, the scan pitch, and the value of scanning speed of the heating beam. However, the melting beam is not limited to having all the variables smaller than the variables of the heating beam, and the values of the variables can be appropriately set as long as the powder material M can be melted. Further, the heating beam is not limited to having all variables greater than the variables of the melting beam, and the values of the variables can be appropriately set as long as the powder material M can be heated without being melted.

The setting items for determining the energy and the irradiation amount of the heating beam and the melting beam are not limited to those illustrated in FIG. 5.

### [Second Melting Pattern]

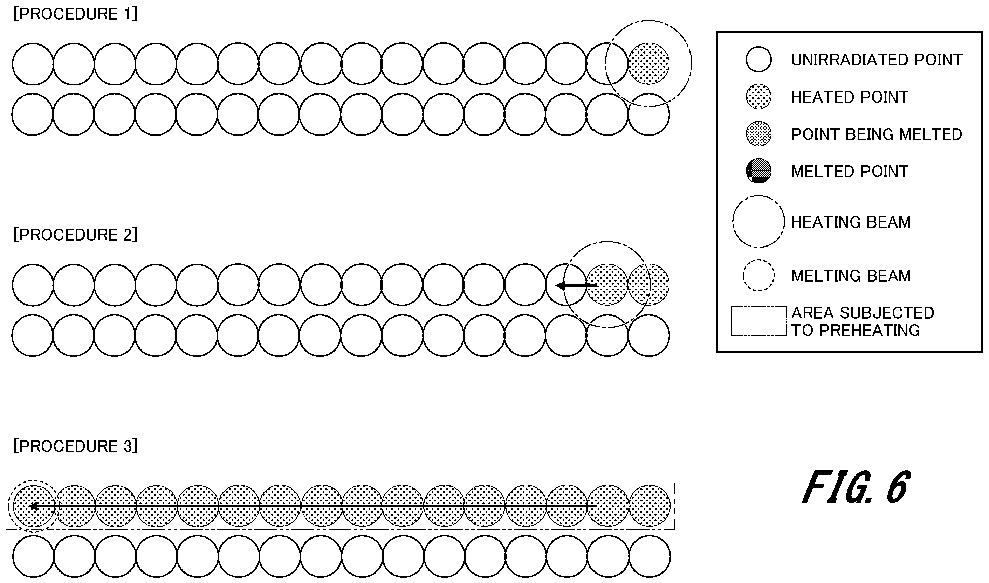

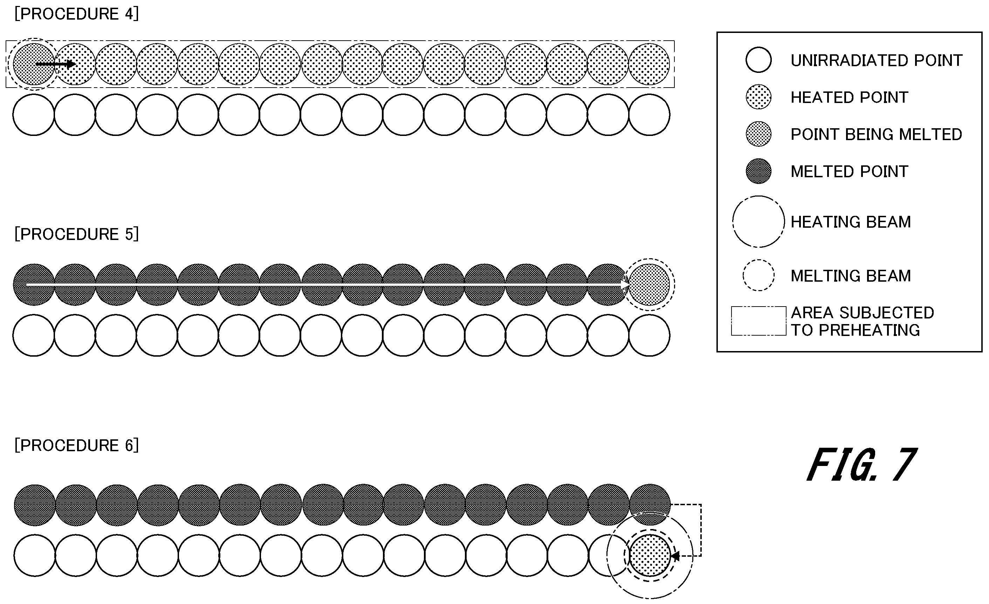

Next, a second melting pattern showing a second example of melting performed by the control device 30 in the melting step will be described with reference to FIGS. 6 and 7.

FIGS. 6 and 7 are views illustrating the second melting pattern.

The point at which the electron beam L1 illustrated in FIGS. 6 and 7 is emitted is a point at which the powder material M is melted when the part 40 is manufactured. The points irradiated with the electron beam L1 are arranged in 2 rows and 16 columns, for example.

As illustrated in FIG. 6, in the second melting pattern, the control device 30 controls the electron gun 2 and the beam deflection unit 10 to set the electron beam L1 as a heating beam at a position where the unirradiated point at the right end of the top row (line) of the part 40 is set as the focal point (Procedure 1).

Next, the control device 30 controls the beam deflection unit 10 to perform pre-melting preheating of the top row of the part 40. That is, the control device 30 irradiates a plurality of unirradiated points in the top row with the heating beam (Procedure 2). As a result, the plurality of unirradiated points in the top row become heated points, and the area including the plurality of heated points becomes an area subjected to pre-melting preheating.

Next, the control device 30 controls the electron gun 2 to change the heating beam to the melting beam at the position where the heated point at the left end in the top row is set as the focal point (Procedure 3). In this example, the unirradiated point at the left end in the area subjected to pre-melting preheating is the last point to be heated. The control device 30 changes the heating beam to the melting beam at the position where the last heated point is the focal point.

Next, as illustrated in FIG. 7, the control device 30 starts irradiation with the melting beam from the heated point at the left end in the top row (Procedure 4). Then, the control device 30 controls the beam deflection unit 10 to irradiate the melting beam sequentially from the heated point at the left end in the top row to the heated point at the right end in the top row, thereby melting the plurality of heated points in the top row (Procedure 5).

Next, the control device 30 controls the electron gun 2 to change the melting beam to the heating beam. Then, the control device 30 controls the beam deflection unit 10 to move the focal point of the heating beam to the unirradiated point at the right end in the second row from the top (Procedure 6). Thereafter, the control device 30 performs Procedure 2 to Procedure 5 on the plurality of unirradiated points in the second row from the top.

In this manner, in the second melting pattern, preheating (pre-melting preheating) and melting are performed for each row with respect to a plurality of unirradiated points in the part 40. This makes it possible to reduce the temperature difference between the molten point and the surrounding thereof. As a result, defects such as cracks are less likely to occur in the manufactured object during solidification after melting, and degradation in the quality of the manufactured object can be suppressed or prevented.

### [Third Melting Pattern]

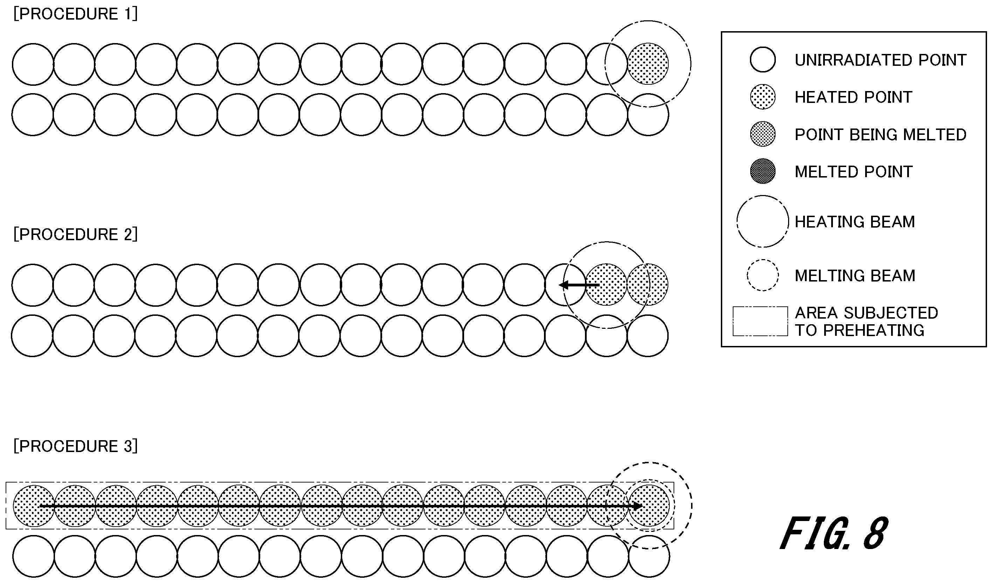

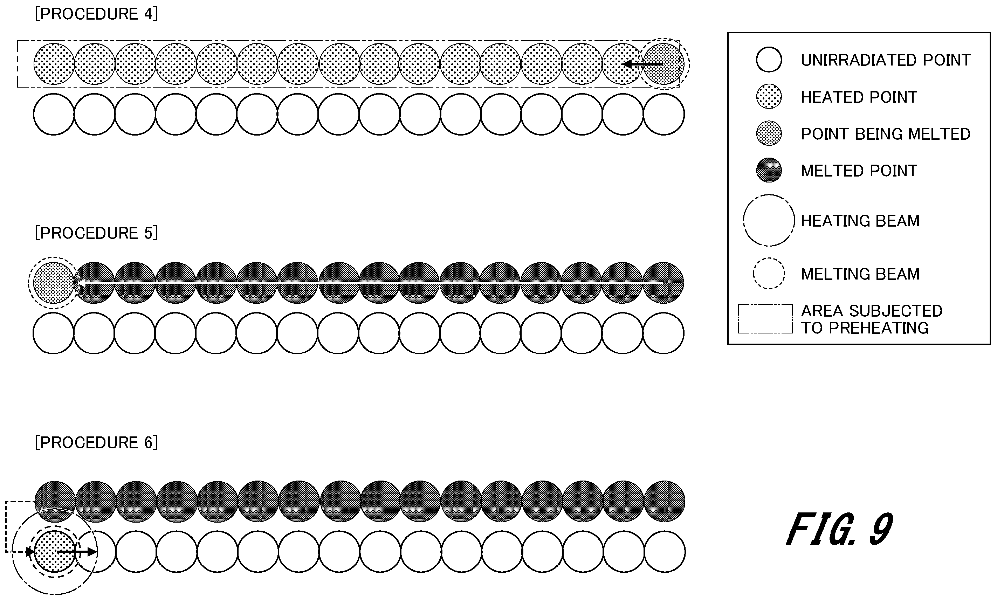

Next, a third melting pattern showing a third example of melting performed by the control device 30 in the melting step will be described with reference to FIGS. 8 and 9.

FIGS. 8 and 9 are views illustrating the third melting pattern.

The point irradiated with the electron beam L1 in FIGS. 8 and 9 is a point at which the powder material M is melted when the part 40 is manufactured. The points irradiated with the electron beam L1 are arranged in 2 rows and 16 columns, for example.

As illustrated in FIG. 8, in the third melting pattern, the control device 30 controls the electron gun 2 and the beam deflection unit 10 to set the electron beam L1 as a heating beam at a position where the unirradiated point at the right end of the top row (line) of the part 40 is set as the focal point (Procedure 1).

Next, the control device 30 controls the beam deflection unit 10 to perform pre-melting preheating of the top row of the part 40. That is, the control device 30 irradiates a plurality of unirradiated points in the top row with the heating beam (Procedure 2). As a result, the plurality of unirradiated points in the top row become heated points, and the area including the plurality of heated points becomes an area subjected to pre-melting preheating.

After irradiating the plurality of unirradiated points in the top row with the heating beam, the control device 30 controls the beam deflection unit 10 to return the focal point of the electron beam L1 to the heated point at the right end in the top row (Procedure 3). The control device 30 controls the electron gun 2 to change the heating beam to the melting beam.

Next, as illustrated in FIG. 9, the control device 30 starts irradiating the melting beam from the heated point at the right end of the top row (Procedure 4). Then, the control device 30 controls the beam deflection unit 10 to irradiate the melting beam sequentially from the heated point at the right end in the top row to the heated point at the left end in the top row, thereby melting the heated points in the top row (Procedure 5).

Next, the control device 30 controls the electron gun 2 to change the melting beam to the heating beam. Then, the control device 30 controls the beam deflection unit 10 to move the focal point of the heating beam to the unirradiated point at the left end in the second row from the top (Procedure 6). Thereafter, the control device 30 performs Procedure 2 to Procedure 5 on the plurality of unirradiated points in the second row from the top.

In this manner, also in the third melting pattern, similarly to the second melting pattern, preheating (pre-melting preheating) and melting are performed for each row with respect to a plurality of unirradiated points in the part 40. This makes it possible to reduce the temperature difference between the molten point and the surrounding thereof. As a result, defects such as cracks are less likely to occur in the manufactured object during solidification after melting, and degradation in the quality of the manufactured object can be suppressed or prevented.

In addition, in the third melting pattern, the directions of pre-melting preheating and melting are opposite in adjacent rows (lines). Thus, the temperature difference between one end and the other end of the part 40 in the first direction X (direction parallel to the row) can be reduced. As a result, degradation in the quality of the manufactured object can be suppressed or prevented as compared with the second melting pattern.

### [Beam Setting in Second and Third Melting Patterns]

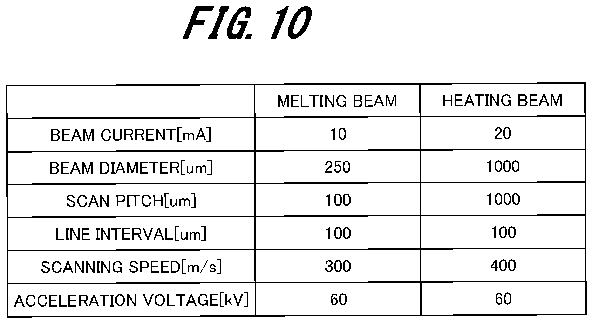

Next, setting of the melting beam and the heating beam in the second and third melting patterns will be described with reference to FIG. 10.

FIG. 10 is a table illustrating setting examples of the melting beam and the heating beam in the second and third melting patterns.

As illustrated in FIG. 10, the setting items of the melting beam and the heating beam include, for example, a beam current value, a beam diameter, a scan pitch, a line interval, a scanning speed, and an acceleration voltage value. In the second and third melting patterns, the heating beam has variables including beam current value, beam diameter, scan pitch, scanning speed, and acceleration voltage value, which can be appropriately set. In addition, the melting beam is a variable in which the beam current value, the beam diameter, the scanning speed, and the acceleration voltage value can be appropriately set.

In the second and third melting patterns, the line intervals between the melting beam and the heating beam are determined according to the interval in the second direction Y among the plurality of unirradiated points of the part 40. Therefore, the line intervals between the melting beams and the heating beams of the second and third melting patterns have the same value.

### [Temperature Distribution during Melting]

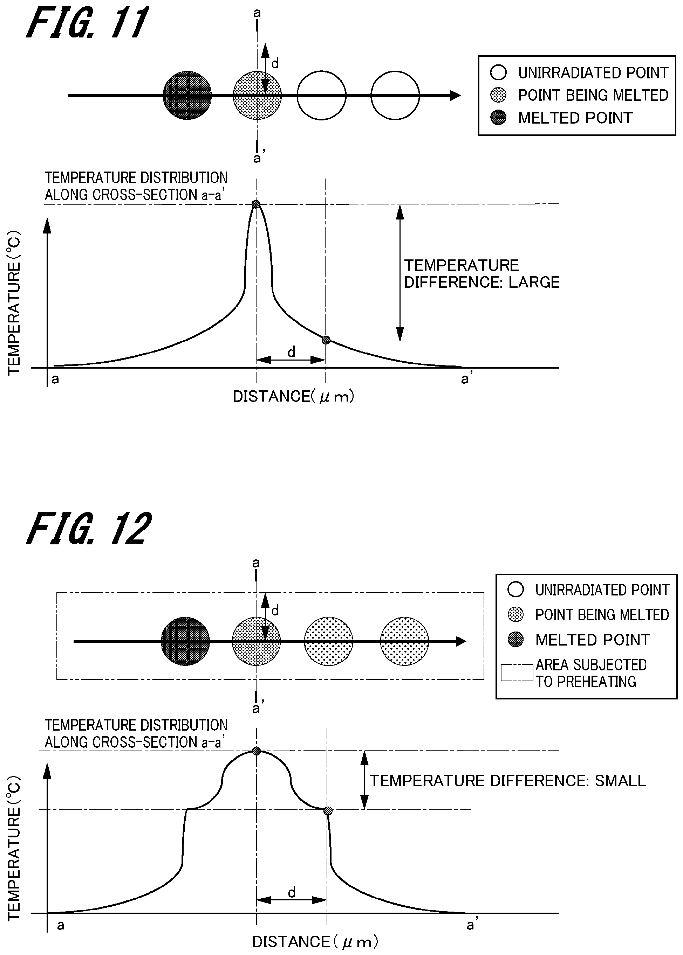

Next, the temperature distribution of the powder material M in a case where the pre-melting preheating is not performed and in a case where the pre-melting preheating is performed will be described with reference to FIGS. 11 and 12.

FIG. 11 is a view illustrating a temperature distribution during melting in a case where pre-melting preheating of the second and third melting patterns is not performed. FIG. 12 is a view illustrating a temperature distribution during melting in a case where the melting (with pre-melting preheating) is performed with the second and third melting patterns.

The vertical axis of the graph illustrated in FIGS. 11 and 12 represents the temperature of the powder material M. The vertical axis of the graphs illustrated in FIGS. 11 and 12 is the distance in the first direction X (direction parallel to the row).

The temperature distribution illustrated in FIG. 11 shows a temperature distribution in a case where the melting is performed without pre-melting preheating as shown in the second and third melting patterns after the entire surface of the powder material M is heated in the first preheating step. As illustrated in FIG. 11, although the temperature at a point being melted is high, the temperature at a location separated by a distance d (µm) in the second direction Y from the center of the point being melted differs significantly from the temperature of the point being melted (where d is greater than the radius of the point being melted). Therefore, defects such as cracks are likely to occur in the manufactured object during solidification after melting.

The temperature distribution illustrated in FIG. 12 shows the temperature distribution during the melting after performing the pre-melting preheating as shown in the second and third melting patterns. As illustrated in FIG. 12, a point located at a distance of d (µm) in the second direction Y from the center of a point being melted is included in the area subjected to pre-melting preheating. Therefore, the temperature at a point located at a distance of d (µm) in the second direction Y from the center of the point being melted is small in difference from the temperature of the point being melted. Therefore, defects such as cracks are less likely to occur in the manufactured object during solidification after melting.

### [Fourth Melting Pattern]

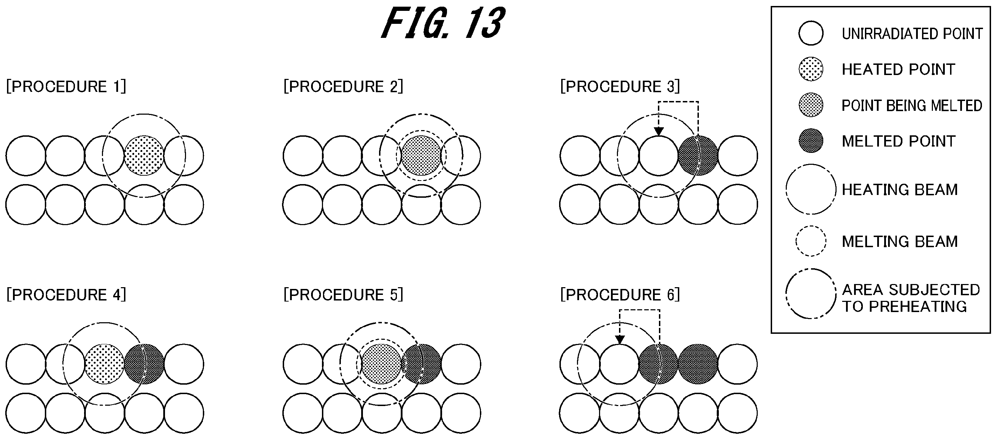

Next, a fourth melting pattern showing a fourth example of melting performed by the control device 30 in the melting step will be described with reference to FIG. 13.

FIG. 13 is a view illustrating the fourth melting pattern.

The point at which the electron beam L1 illustrated in FIG. 13 is emitted is a point at which the powder material M is melted when the part 40 is manufactured. The points irradiated with the electron beam L1 are arranged in 2 rows and 5 columns, for example.

As illustrated in FIG. 13, in the fourth melting pattern, the control device 30 controls the electron gun 2 and the beam deflection unit 10 to irradiate, for example, the second unirradiated point from the right end in the top row (line) of the part 40 with a heating beam to perform pre-melting preheating (Procedure 1). As a result, the area including the second heated point from the right end in the top row becomes an area subjected to pre-melting preheating.

Next, the control device 30 controls the electron gun 2 to change the heating beam to the melting beam and melts the second heated point from the right end in the top row (Procedure 2). As a result, the second heated point from the right end of the top row is a melted point.

Next, the control device 30 controls the electron gun 2 and the beam deflection unit 10 to move the focal point to the third unirradiated point (the left adjacent to the melted point) from the right end of the top row, and changes the melting beam to the heating beam (Procedure 3). At this time, the control device 30 moves the focal point of the beam while changing the melting beam to the melting beam.

Subsequently, the control device 30 irradiates the third unirradiated point from the right end of the top row with the heating beam until a certain period elapses (Procedure 4). As a result, the third unirradiated point from the right end in the top row become heated points, and the area including the heated points becomes an area subjected to pre-melting preheating.

Next, the control device 30 controls the electron gun 2 to change the heating beam to the melting beam and melts the third heated point from the right end in the top row (Procedure 5). As a result, the third heated point from the right end of the top row is a melted point.

Next, the control device 30 controls the electron gun 2 and the beam deflection unit 10 to move the focal point to the fourth unirradiated point (the left adjacent to the melted point) from the right end of the top row, and changes the melting beam to the heating beam (Procedure 6). At this time, the control device 30 moves the focal point of the beam while changing the melting beam to the heating beam.

In this manner, the control device 30 controls the electron gun 2 and the beam deflection unit 10 to move the focal point to an unirradiated point to be melted next, thereby performing pre-melting preheating and melting. Then, the control device 30 melts all the unirradiated points of the part 40.

In this manner, in the fourth melting pattern, preheating (pre-melting preheating) and melting are performed for each unirradiated point (focal position) in the part 40. This makes it possible to reduce the temperature difference between the molten point and the surrounding thereof. As a result, defects such as cracks are less likely to occur in the manufactured object during solidification after melting, and degradation in the quality of the manufactured object can be suppressed or prevented.

### [Beam Setting in Fourth Melting Pattern]

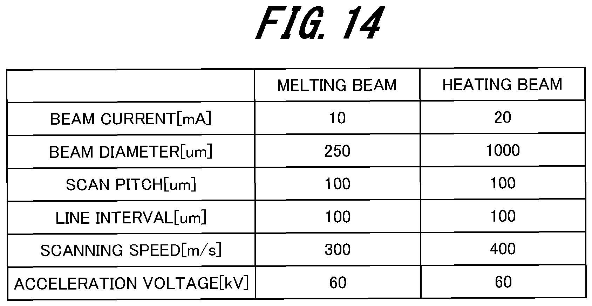

Next, setting of the melting beam and the heating beam in the fourth melting pattern will be described with reference to FIG. 14.

FIG. 14 is a table illustrating setting examples of the melting beam and the heating beam in the fourth melting pattern.

As illustrated in FIG. 14, the setting items of the melting beam and the heating beam include, for example, a beam current value, a beam diameter, a scan pitch, a line interval, a scanning speed, and an acceleration voltage value. In the fourth melting pattern, the heating beam and the melting beam have variables that can be appropriately set, including a beam current value, a beam diameter, a scanning speed, and an acceleration voltage value.

The line intervals of the melting beam and the heating beam in the fourth melting pattern are determined according to the intervals in the second direction Y of a plurality of unirradiated points of the part 40. Therefore, the line intervals between the melting beams and the heating beams of the fourth melting pattern have the same value.

In addition, scan pitches of the melting beam and the heating beam in the fourth melting pattern are determined according to intervals in the first direction X of a plurality of unirradiated points of the part 40. Therefore, the scan pitches of the melting beam and the heating beam of the fourth melting pattern have the same value.

### [Temperature Distribution during Melting]

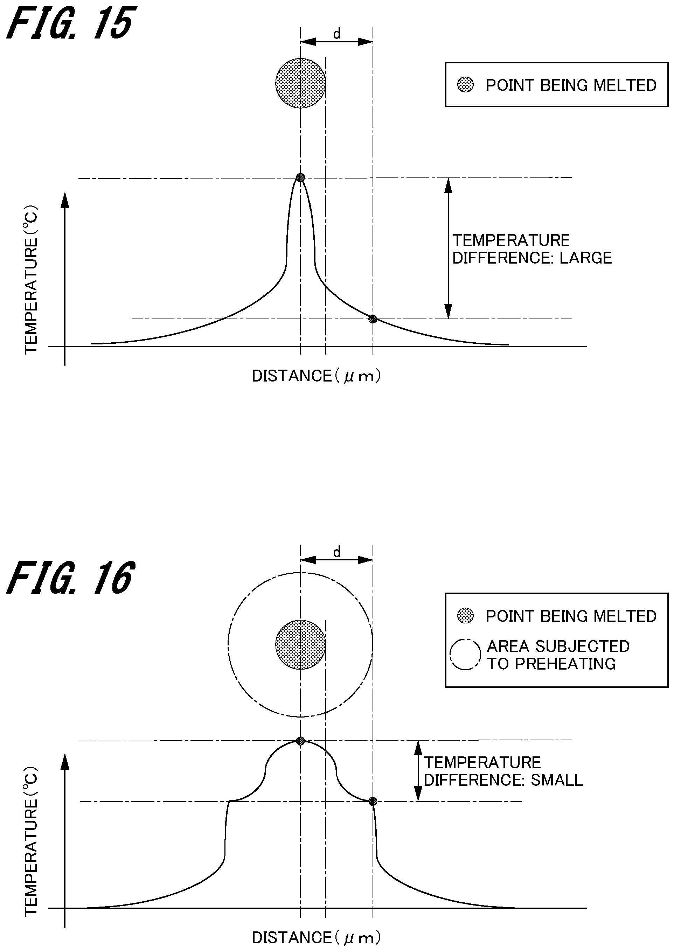

Next, the temperature distribution of the powder material M in a case where the pre-melting preheating is not performed and in a case where the pre-melting preheating is performed will be described with reference to FIGS. 15 and 16.

FIG. 15 is a view illustrating a temperature distribution during melting in a case where pre-melting preheating of the fourth melting pattern is not performed. FIG. 16 is a view illustrating the temperature distribution during melting in a case where the melting (with pre-melting preheating) is performed with the fourth melting pattern.

The vertical axis of the graph illustrated in FIGS. 15 and 16 represents the temperature of the powder material M. The vertical axis of the graphs illustrated in FIGS. 15 and 16 represents the distance in the first direction X (the direction parallel to the rows) or the second direction (the direction parallel to the columns).

The temperature distribution illustrated in FIG. 15 shows a temperature distribution in a case where the melting is performed without pre-melting preheating as shown in the fourth melting pattern after the entire surface of the powder material M is heated in the first preheating step. As illustrated in FIG. 15, although the temperature at a point being melted is high, the temperature at a location separated by a distance d (µm) in the first direction X from the center of the point being melted differs significantly from the temperature of the point being melted (where d is greater than the radius of the point being melted). Therefore, defects such as cracks are likely to occur in the manufactured object during solidification after melting.

The temperature distribution illustrated in FIG. 16 shows the temperature distribution during the melting after performing the pre-melting preheating as shown in the fourth melting pattern. As illustrated in FIG. 16, a point located at a distance of d (µm) in the first direction X from the center of a point being melted is included in the area subjected to pre-melting preheating. Therefore, the temperature at a point located at a distance of d (µm) in the first direction X from the center of the point being melted is small in difference from the temperature of the point being melted. Therefore, defects such as cracks are less likely to occur in the manufactured object during solidification after melting.

The embodiments of the present invention have been described above. However, the present invention is not limited to the above-described embodiments, and various modifications can be made without departing from the gist of the invention described in the claims. For example, the above-described embodiments describe the present invention in detail in an easy-to-understand manner, and the present invention is not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add, delete, and replace other configurations for a part of the configuration of each embodiment.

In the second and third melting patterns according to the above-described embodiment, preheating (pre-melting preheating) and melting are performed for each row extending in the first direction X. However, as the melting pattern according to the present invention, for example, preheating (pre-melting preheating) and melting may be performed for each column extending in the second direction Y. Furthermore, the melting pattern according to the present invention may be such that preheating (pre-melting preheating) and melting are performed for each line extending in an arbitrary direction that intersects with the first direction X and the second direction Y.

In addition, in the above-described embodiment, the example in which the electron gun 2 that emits the electron beam L1 is applied as the beam emission unit has been described; however the present invention is not limited thereto. For example, as the beam emission unit according to the present invention, an irradiation gun that emits a laser beam may be employed. In this case, the unirradiated point of the powder material M1 may be irradiated with a laser beam to be melted and solidified.

### Description of Reference Numerals

- 1: Three-dimensional powder bed fusion additive manufacturing (PBF-AM) apparatus
- 2: Electron gun (beam emission unit)
- 3: Deflection amplifier
- 4: Lens
- 5: Powder material storing chamber
- 6: Stage
- 7: Powder bed fusion additive manufacturing arm
- 8: Coordinate conversion correction circuit
- 10: Beam deflection unit
- 21: Emitter
- 22: Extraction electrode
- 23: Acceleration electrode
- 24: Acceleration power supply
- 30: Control unit
- L1: Electron beam
- M1: Powder material

## Claims

1. A three-dimensional powder bed fusion additive manufacturing (PBF-AM) apparatus (1) comprising:
a stage (6) on which a powder layer made of a powder material (M1) is laid;
a beam emission unit (2) that emits a beam toward the powder layer laid on the stage (6);
a beam deflection unit (10) that deflects the beam emitted from the beam emission unit (2); and
a control unit (30) that controls the beam emission unit (2) and the beam deflection unit (10), wherein
before melting a region corresponding to a part to be manufactured in the powder layer laid on the stage (6) with a melting beam, the control unit (30) controls the beam emission unit (2) and the beam deflection unit (10) to perform pre-melting preheating in which the region corresponding to the part is heated with a heating beam.

2. The three-dimensional PBF-AM apparatus (1) according to claim 1, wherein
the control unit (30) controls the beam emission unit (2) and the beam deflection unit (10) to perform a preheating step of heating an entire surface of the powder layer on the stage (6) and
after the preheating step, controls the beam emission unit (2) and the beam deflection unit (10) to perform a melting step of melting a region corresponding to the part, and
the pre-melting preheating is performed in the melting step.

3. The three-dimensional PBF-AM apparatus (1) according to any preceding claim, wherein
a diameter of the melting beam is smaller than a diameter of the heating beam.

4. The three-dimensional PBF-AM apparatus (1) according to preceding claim, wherein
a scanning speed of the heating beam is higher than a scanning speed of the melting beam.

5. The three-dimensional PBF-AM apparatus (1) according to preceding claim, wherein
the control unit (30) controls the beam emission unit (2) and the beam deflection unit (10) to irradiate the entire surface of a region corresponding to the part with the heating beam to perform pre-melting preheating and, thereafter,
irradiates the entire surface of the region corresponding to the part with a melting beam to perform melting.

6. The three-dimensional PBF-AM apparatus (1) according to any one of claims 1 to 4, wherein
the control unit (30) controls the beam emission unit (2) and the beam deflection unit (10) to perform pre-melting preheating in which the heating beam is radiated to each arbitrary line in a region corresponding to the part, and to perform melting in which the melting beam is radiated to each arbitrary line in the region.

7. The three-dimensional PBF-AM apparatus (1) according to claim 6, wherein
the control unit (30) causes the pre-melting preheating and the melting to proceed in one direction for each of the arbitrary lines.

8. The three-dimensional PBF-AM apparatus (1) according to claim 6, wherein
the control unit (30) makes directions in which the pre-melting preheating and the melting are performed in adjacent arbitrary lines opposite to each other.

9. The three-dimensional PBF-AM apparatus (1) according to any one of claims 1 to 4, wherein
the control unit (30) controls the beam emission unit (2) and the beam deflection unit (10) to perform pre-melting preheating by irradiating each focal position corresponding to the part with the heating beam, and to perform melting by irradiating each focal position with the melting beam.

10. A three-dimensional powder bed fusion additive manufacturing (PBF-AM) method comprising:
in a melting step of melting a region corresponding to a part to be manufactured in a powder layer laid on a stage,
causing a control unit (30) to perform pre-melting preheating of heating the region corresponding to the part with a heating beam by controlling a beam emission unit (2) and a beam deflection unit (10) before melting the region with the melting beam.
